# EUROPÄISCHE PATENTSCHRIFT

(11) **EP 2 774 788 B1**
(45) Veröffentlichungstag und Bekanntmachung des Hinweises auf die Patenterteilung: **01.01.2020**
(21) Anmeldenummer: 14155403.0
(22) Anmeldetag: 17.02.2014
(51) Int. Cl.: B60H 1/00

(54) **Klimagerät für ein Kraftfahrzeug**
Air conditioning device for a motor vehicle
Climatisation pour véhicule automobile

(30) Priorität: 09.03.2013 DE 102013004134
(43) Veröffentlichungstag der Anmeldung: 10.09.2014
(73) Patentinhaber: Volkswagen Aktiengesellschaft, 38440 Wolfsburg (DE)
(72) Erfinder: Ehlers, Carsten, 38100 Braunschweig (DE); Grimke, Dirk, 29399 Wahrenholz (DE)

(56) Entgegenhaltungen:
- DE-A1- 19 649 512
- US-A- 6 048 263
- US-A1- 2001 025 501
- US-A1- 2007 266 726

## Beschreibung

Die Erfindung bezieht sich auf ein Klimagerät für ein Kraftfahrzeug, umfassend ein Gehäuse mit
- einem Verdampfer zur Entfeuchtung und Kühlung eines Luftstroms,
- einem dem Verdampfer in Strömungsrichtung nachgeordneten Luftleitelement zur Aufspaltung des gekühlten und entfeuchteten Luftstroms wenigstens in einen ersten und einen zweiten Luftstromanteil,
- einem dem Luftleitelement in Strömungsrichtung nachgeordneten Heiz-Wärmeübertrager zur Aufheizung des ersten Luftstromanteils,
- einer einerseits dem Heiz-Wärmeübertrager und andererseits dem Luftleitelement in Strömungsrichtung nachgeordneten Mischkammer zur Mischung des ersten und des zweiten Luftstromanteils,
sodass das Gehäuse eine Mehrzahl von Zonen unterschiedlicher Zonen-Relativtemperatur aufweist, wobei von dem Gehäuse Luftleitkanäle abgehen, die zur Leitung von Mischluftanteilen unterschiedlicher Kanal-Relativtemperaturen bestimmt sind, wobei mehrere Luftleitkanäle abschnittsweise zu einem unmittelbar an dem Gehäuse anliegenden Kanalbündel aus parallelen und einander unmittelbar benachbarten Einzelkanälen unterschiedlicher Kanal-Relativtemperaturen zusammengefasst sind.

Derartige Klimageräte sind bekannt aus der US 2007/0266726.

Die DE 196 49 512 A1 sowie aus der DE 35 29 940 A1 offenbaren Klimageräte, wie sie für den Einsatz in Kraftfahrzeugen vielfach verwendet werden. Solche Klimageräte umfassen ein Gebläse zur Erzeugung eines Luftstromes, der ringförmig aus dem Fahrzeuginneren durch das Klimagerät und zurück in den Fahrzeuginnenraum geführt werden kann (Umluftbetrieb) oder der vom Außenraum des Fahrzeuges in dessen Innenraum führen kann (Frischluftbetrieb). Das Gebläse kann innerhalb eines Gehäuses angeordnet oder außerhalb des Gehäuses positioniert und mittels Luftkanälen an das Gehäuse angekoppelt sein. In dem Gehäuse durchläuft der Luftstrom einen Verdampfer, der Teil eines Kältemittelkreises ist und in dem Kältemittel verdampft. Durch die thermische Wechselwirkung zwischen dem Luftstrom und dem verdampfenden Kältemittel erfolgt eine Abkühlung und Entfeuchtung des Luftstromes. Da nicht in allen Fällen eine Abkühlung der Innenraumtemperatur des Kraftfahrzeuges gewünscht ist, ist stromabwärts des Verdampfers ein Heiz-Wärmeübertrager angeordnet, der beispielsweise von Motorkühlwasser und/oder auf andere Weise, beispielsweise elektrisch, beheizt wird.

Entsprechend der Einstellung eines Luftleitelementes, beispielsweise einer Luftklappe, zwischen dem Verdampfer und dem Heiz-Wärmeübertrager wird die Luft zur Aufheizung ganz oder teilweise durch den Heiz-Wärmeübertrager geleitet und/oder ganz oder teilweise an ihm vorbei. Die beiden resultierenden Luftstromanteile, nämlich der aufgeheizte Warmluftanteil und der nicht aufgeheizte Kaltluftanteil gelangen in eine Mischkammer, wo sich gemäß der Temperatur und der Volumenanteile der beiden Luftstromanteile eine Mischtemperatur einstellt. Von der Mischkammer gehen mehrere Luftleitkanäle ab, die die Luft zu unterschiedlichen Austrittsöffnungen in Fahrzeuginneren leiten. Je nach dem genauen Ort des Abzweigs des jeweiligen Luftleitkanals der Mischkammer wird Luft unterschiedlicher Temperatur in die einzelnen Kanäle eingeleitet. Dieser Effekt, der im Wesentlichen auf die unvollständige Mischung der Luftstromanteile in der Mischkammer zurückzuführen ist, wird bewusst eingesetzt, um eine "Schichtung" der Temperaturen zu erreichen, mit denen die Luft in den Innenraum einströmt. So wird typischerweise die Zufuhr wärmerer Luft im Fußbereich und die Zufuhr kühlerer Luft im Bereich des Oberkörpers eines Fahrzeuginsassen gewünscht.

Bei den bekannten Klimageräten entstehen also bei bestimmungsgemäßem Betrieb im Gehäuse Zonen unterschiedlicher Temperatur und in den Luftleitkanälen Luftströme unterschiedlicher Temperatur, wobei die sich ergebenden Absoluttemperaturen von den aktuellen Einstellungen und Umgebungsbedingungen abhängen. Allerdings können von den aktuellen Einstellungen und Umgebungsbedingungen unabhängige, qualitative Relativtemperaturen bestimmt werden. So kann die Zone unmittelbar stromabwärts des Heiz-Wärmeübertragers ohne Weiteres als diejenige Gehäusezone mit der höchsten Zonen-Relativtemperatur identifiziert werden, wohingegen die Zone unmittelbar stromabwärts des Verdampfers ohne Weiteres als diejenige Gehäusezone mit der niedrigsten Zonen-Relativtemperatur identifiziert werden kann. In beiden Fällen ist hier die Luft noch unvermischt mit dem Luftstrom, der den betreffenden Wärmetauscher nicht passiert hat. Vergleichbares gilt bezüglich der Temperaturen für die vom Gehäuse abgehenden Luftleitkanäle. So können bestimmte Kanäle, die von einem Bereich der Mischzone ausgehen, wo gemäß strömungsphysikalischer Gesetzmäßigkeiten ein besonders großer Warmluftanteil vorliegt, als Kanäle hoher Kanal-Relativtemperatur identifiziert werden, wohingegen andere Kanäle, die von Bereichen der Mischkammer abgehen, in denen gemäß strömungsphysikalischer Gesetzmäßigkeiten ein besonders hoher Anteil an Kaltluft vorliegt, als Kanäle niedriger Kanal-Relativtemperatur identifiziert werden können. In diesem Sinne sind die im Rahmen der vorliegenden Beschreibung verwendeten Begriffe der "Zonen-Relativtemperatur" und "Kanal-Relativtemperatur" zu verstehen. Sie dürfen keinesfalls mit der aktuellen Absoluttemperatur im Gehäuse oder einem Luftleitkanal verwechselt werden.

Wie erläutert, sind die Unterschiede der Kanal-Relativtemperaturen zur Erzielung der Schichtung durchaus beabsichtigt. Problematisch ist jedoch, dass sich die eingangs in die Luftleitkanäle eingespeisten Temperaturdifferenzen während der Passage der Luftleitkanäle aufgrund thermischer Wechselwirkung mit anderen Elementen nivellieren können. Dabei geht die Schichtung verloren. Abhilfe könnte die thermisch isolierte Ausgestaltung der Luftkanalwände schaffen, was jedoch teuer, aufwendig und im Hinblick auf die Bauraumerfordernisse nachteilig ist. Bei dem in der oben genannten DE 35 29 940 A1 offenbarten Klimagerät werden sämtliche Luftleitkanäle beabstandet voneinander und von dem Gehäuse des Klimagerätes abgeführt. Die Kanäle sind somit durch sie umgebende Luftschicht sowohl voneinander als auch insbesondere von dem Gehäuse des Klimagerätes isoliert. Bei dem in der oben ebenfalls genannten DE 196 49 512 A1 offenbarten Klimagerät gilt dies für die Mehrzahl der Luftleitkanäle ebenfalls. Lediglich der Luftleitkanal hoher Kanal-Relativtemperatur, der für die Luftbeschickung des Fußraumes im Innenraum des Kraftfahrzeugs zuständig ist, wird dem Gehäuse unmittelbar benachbart, d.h. im direkten Kontakt zu diesem, geführt und zwar insbesondere im Bereich der Zone höchster Zonen-Relativtemperatur, nämlich entlang der dem Heiz-Wärmeübertrager unmittelbar gegenüberliegenden Gehäusewandung, so dass der Luftstrom in diesem Kanal zusätzliche Wärme aufnehmen kann, was die Schichtung verstärkt bzw. ihrer Nivellierung entgegenwirkt.

Nachteilig ist der erhebliche Bauraumbedarf durch die isoliert geführten Luftleitkanäle sowie die Beschränkung der jeweiligen Konstruktionen auf die speziell offenbarte räumliche Konstellation der Luftleitkanäle. Insbesondere in Fällen, in denen die räumliche Lage und Ausrichtung des Klimagerätes relativ zu dem zu beschickenden Fahrzeuginnenraum eine Führung mehrerer Luftleitkanäle dicht entlang der Gehäusewandung verlangt, kann keine zuverlässige Temperaturschichtung mehr gewährleistet werden.

Die eingangs genannte, gattungsbildender Druckschrift offenbart ein Klimagerät, bei dem die vom Gehäuse abgehenden Luftleitkanäle unterschiedlicher Relativtemperatur zu einem Kanalbündel zusammengefasst sind. Dieses wird, vergleichbar dem Hochtemperatur-Einzelkanal der vorgenannten DE 196 49 512 A1, in Kontakt zur Hochtemperatur-Zone des Gehäuses geführt, wobei allerdings die Kanäle niedriger Kanal-Relativtemperatur nicht am Gehäuse anliegen, sondern vielmehr durch die Kanäle hoher Kanal-Relativtemperatur gegen das Gehäuse abgeschirmt werden.

Ein vergleichbares Konzept ist in der US 6 048 263 A offenbart.

Die US 2001/0025501 A1 offenbart ein Klimagerät, bei dem Hochtemperatur-Einzelkanäle an einer Niedertemperatur-Zone des Gehäuses entlang geführt werden. Sofern hier keine thermisch isolierende Ausgestaltung der Trennwand vorgesehen ist, muss mit einer erheblichen, nachteiligen Angleichung der Temperaturniveaus gerechnet werden.

Es ist die Aufgabe der vorliegenden Erfindung, ein allgemeines Konzept anzubieten, welches es erlaubt, bei Klimageräten für Kraftfahrzeuge unabhängig von der konkreten räumlichen Konstellation eine vorbestimmte Temperaturschichtung zu gewährleisten.

Diese Aufgabe wird in Verbindung mit den Merkmalen des Oberbegriffs von Anspruch 1 dadurch gelöst, dass das Kanalbündel entlang mehrerer Zonen unterschiedlicher Zonen-Relativtemperaturen verläuft und die Verteilung der Querschnitte seiner Einzelkanäle über deren Längserstreckung derart variiert, dass an jedem lokalen Abschnitt die Querschnittsprofile der Einzelkanäle einander so überlappen, dass die Kontaktflächen der Einzelkanalabschnitte mit dem Gehäuse umso kleiner sind, je größer die Differenz zwischen ihrer jeweiligen Kanal-Relativtemperatur und der Zonen-Relativtemperatur unmittelbar gehäuseseitig des jeweiligen Kanalbündelabschnitts ist.

Wie grundsätzlich bekannt, werden auch bei der Erfindung wenigstens einige der vom Gehäuse abgehenden Luftleitkanäle zu einem Kanalbündel zusammengefasst, welches als solches der Gehäusewandung unmittelbar benachbart, d.h. diese direkt kontaktierend, geführt ist. Dabei ist es sowohl möglich, dass das Kanalbündel und das Gehäuse separate, aneinander anliegenden Wandungen aufweisen, als auch dass das Kanalbündel und das Gehäuse wenigstens bereichsweise von einer gemeinsamen Trennwand gegeneinander abgegrenzt sind. Letztere Variante wird aus Bauraum- und Gewichtsgründen bevorzugt. Innerhalb des Kanalbündels sind die Einzelkanäle ebenfalls einander unmittelbar benachbart, d.h. einander kontaktierend angeordnet, was zu einer maximalen räumlichen Konzentration und daher zu maximaler Bauraumersparnis führt. Auch hier ist eine separate Ausbildung denkbar; bevorzugt ist jedoch eine Ausgestaltung mit wenigstens bereichsweise gemeinsamen Trennwänden.

Je nach dem, an welcher Gehäusezone das Kanalbündel entlang geführt wird, "sehen" die in ihm geführten Luftströme eine Wärmequelle (Zone hoher Zonen-Relativtemperatur) oder eine Wärmesenke (Zone niedriger Zonen-Relativtemperatur). Entsprechend ist die Anordnung der Einzelkanäle im Kanalbündel gestaltet. Die einander zu einer kompakten, flächenfüllenden Einheit ergänzenden Querschnittsprofile der Einzelkanäle sind so gestaltet, dass diejenigen Kanäle, deren Kanal-Relativtemperatur der Zonen-Relativtemperatur der kontaktierten Gehäusezone besondere ähnlich sind, diejenigen Kanäle mit großer Differenz zwischen Kanal-und Zonen-Relativtemperatur weitgehend oder - im Extremfall - vollständig gegen das Gehäuse abschirmen und damit die unerwünschte, nivellierende thermische Wechselwirkung reduzieren oder ganz unterbinden. Die Luftströme in den abschirmenden Querschnittsprofilbereichen wirken somit als Isolierschicht für die abgeschirmten Querschnittsprofilbereiche. Dieses grundlegende Konzept ist unabhängig davon, ob das Kanalbündel an einer "warmen" oder "kalten" Gehäusezone vorbei geführt wird. In ersterem Fall werden diejenigen Luftleitkanäle, die einen wärmeren Luftstrom leiten sollen, mit einem Querschnittsprofil versehen, welches eine besonders große Kontaktfläche zur Gehäusewand aufweist. Die schirmen diejenigen Kanäle, die kühlere Luftströme leiten, thermisch gegen das Gehäuse ab. Im oben zweitgenannten Fall werden die Verhältnisse umgekehrt gestaltet.

Bis hierher beschränken sich die obigen Betrachtungen auf einen lokalen, an einer Gehäusezone anliegenden Kanalbündelabschnitt. Gemäß der vorliegenden Erfindung ist jedoch vorgesehen, dass das Kanalbündel über eine längere Strecke dem Gehäuse unmittelbar benachbart an diesem entlang geführt ist. Entsprechend kontaktiert das Kanalbündel mehrere Gehäusezonen unterschiedlicher Zonen-Relativtemperatur. Für eine solche Ausgestaltung ist vorgesehen, dass die Verteilung der Querschnitte der Einzelkanäle über ihre Längserstreckung entsprechend, d.h. im Sinn der oben erläuterten Erfindung, variiert. Mit anderen Worten ändern sich die Profile der Einzelkanäle entlang ihrer Längserstreckung so, dass an jedem lokalen Abschnitt die Kontaktflächen der Einzelkanalabschnitte mit dem Gehäuse umso kleiner sind, je größer die Differenz ihrer jeweiligen Kanal-Relativtemperatur und der Zonen-Relativtemperatur unmittelbar gehäuseseitig des jeweiligen lokalen Kanalbündelabschnitts ist.

Es sei ausdrücklich darauf hingewiesen, dass die Formulierung, wonach die Kontaktflächen der Einzelkanalabschnitte mit dem Gehäuse "umso kleiner sind, je größer" die Differenz zwischen ihrer jeweiligen Kanal-Relativtemperatur und der Zonen-Relativtemperatur unmittelbar gehäuseseitig des jeweiligen Kanalbündelabschnitts ist, rein qualitativ und nicht als zwingende Angabe einer durch eine stetige mathematische Funktion ausdrückbaren Relation, etwa einer strengen Proportionalität, zu verstehen ist - obgleich eine solche Ausgestaltung nicht ausgeschlossen wird.

Die erfindungsgemäße Ausgestaltung der Luftleitkanäle erlaubt nicht nur die Abschwächung der thermischen Wechselwirkung als ein unvermeidbares Übel, sondern gestattet zudem deren positive Ausnutzung zur stärkeren Ausprägung der thermischen Schichtung. So kann das Kanalbündel gezielt an Gehäusezonen besonders hoher oder besonders niedriger Zonen-Relativtemperatur entlang geführt werden, um Luftströme in ausgewählten Einzelkanälen gezielt abzukühlen oder zu erwärmen. So kann bei einer ersten Ausführungsform der Erfindung vorgesehen sein, dass das Kanalbündel abschnittsweise im Bereich einer Zone hoher Zonen-Relativtemperatur, die sich in Strömungsrichtung an den Heiz-Wärmeübertrager anschließt, am Gehäuse anliegt. Umgekehrt kann bei einer anderen Ausführungsform der Erfindung vorgesehen sein, dass das Kanalbündel abschnittsweise im Bereich einer Zone niedriger Zonen-Relativtemperatur, die in Strömungsrichtung unmittelbar vor dem Heiz-Wärmeübertrager liegt, am Gehäuse anliegt.

Für die spezielle Beschreibung der Querschnittsprofile der Einzelkanäle sind unterschiedlichste Varianten denkbar. Als günstig hat sich erwiesen, dass das Kanalbündel wenigstens drei unmittelbar nebeneinander angeordnete Einzelkanäle umfasst, von denen ein mittlerer Einzelkanal ein symmetrisch zu den zwei äußeren Einzelkanälen ausgerichtetes, dreieckiges oder trapezförmiges Querschnittsprofil aufweist. Die beiden äußeren Einzelkanäle haben dabei ein korrespondierendes Querschnittsprofil, so dass das Gesamt-Querschnittsprofil des Kanalbündels beispielsweise rechteckig gestaltet ist. Während die Relativausrichtung des mittleren Einzelkanals zu den beiden äußeren Einzelkanälen durch die obige Definition festgelegt ist, kann bezüglich seiner Relativausrichtung zum Gehäuse zwischen zwei Stellungen gewählt werden, nämlich einer Stellung minimaler Kontaktfläche, bei der die Dreiecksspitze bzw. die kurze Parallelseite des Trapezes an der Gehäusewandung anliegt, und einer Stellung maximaler Kontaktfläche, bei der die Grundseite des Dreiecks bzw. die lange Parallelseite des Trapezes an der Gehäusewand anliegend. Die spezielle Wahl der Ausrichtung richtet sich im oben erläuterten Sinn nach der Verteilung der Kanal-Relativtemperaturen.

Bei einer alternativen Ausgestaltung ist vorgesehen, dass das Kanalbündel wenigstens einen ersten Einzelkanal mit rechteckigem Querschnittsprofil und zwei unmittelbar nebeneinander angeordnete zweite Einzelkanäle, deren zueinander spiegelsymmetrische Querschnittsprofile L-förmig mit einander zugewandten, am Gehäuse anliegenden Horizontal-Schenkeln ausgebildet sind, umfasst, wobei das Rechteckprofil des ersten Einzelkanals bündig zwischen den Vertikal-Schenkeln der L-Profile der zweiten Einzelkanäle eingebettet ist. Bei dieser Ausführungsform ist der erste Einzelkanal durch die beiden zweiten Einzelkanäle vollständig von dem Gehäuse abgeschirmt.

Bei einer weiteren Alternativgestaltung ist vorgesehen, dass das Kanalbündel wenigstens zwei erste Einzelkanäle mit rechteckigem Querschnittsprofil und einen zweiten Einzelkanal mit T-förmig ausgebildetem Querschnittsprofil, dessen Horizontalbalken am Gehäuse anliegt, umfasst, wobei die Rechteckprofile der ersten Einzelkanäle bündig in den Winkeln zwischen dem Horizontal- und dem Vertikalbalken der T-Profile des zweiten Einzelkanals liegen. Bei dieser Ausführungsform schirmt der zweite Einzelkanal die beiden ersten Einzelkanäle vollständig vom Gehäuse ab.

Weitere Merkmale und Vorteile der Erfindung ergeben sich aus der nachfolgenden, speziellen Beschreibung und den Zeichnungen.

Es zeigen:
- Figur 1: eine schematische Darstellung eines Klimagerätes
- Figur 2: eine Schnittdarstellung entlang der Schnittlinie A-A in Figur 1 gemäß einer ersten Ausführungsform der Erfindung
- Figur 3: eine Schnittdarstellung entlang der Schnittlinie A-A in Figur 1 gemäß einer zweiten Ausführungsform der Erfindung
- Figur 4: eine schematische Darstellung eines alternativen Klimagerätes
- Figur 5: eine Schnittdarstellung entlang der Schnittlinie A-A in Figur 4 gemäß einer dritten Ausführungsform der Erfindung
- Figur 6: eine Schnittdarstellung entlang der Schnittlinie A-A in Figur 4 gemäß einer vierten Ausführungsform der Erfindung.

Gleiche Bezugszeichen in den Figuren deuten auf gleiche oder analoge Bauteile hin.

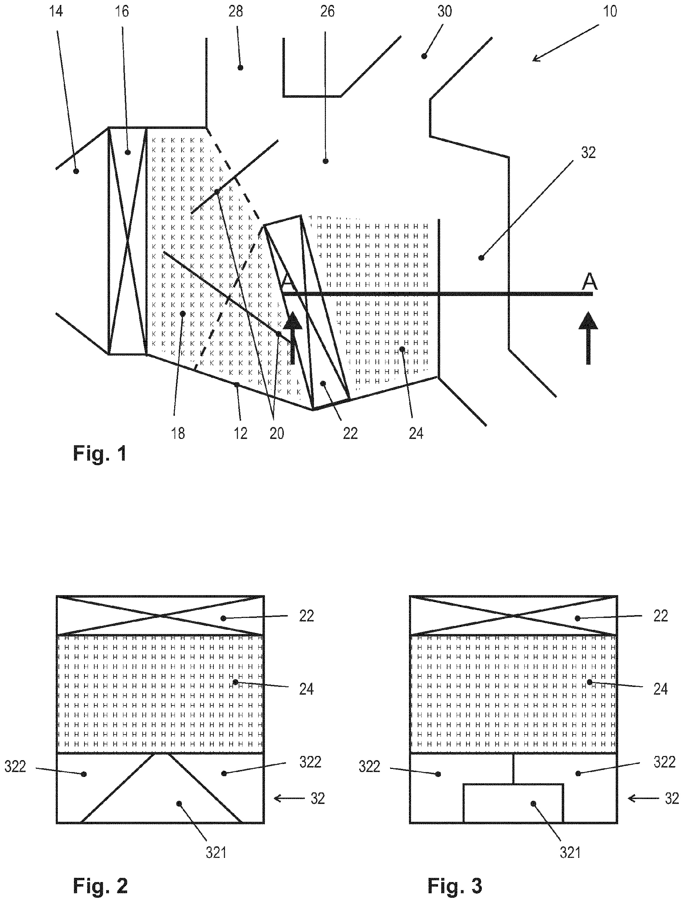

Figur 1 zeigt eine schematische Darstellung eines Klimagerätes 10, welches für den Einsatz in Kraftfahrzeugen geeignet und bestimmt ist. Ein Gehäuse 12 weist - links in Figur 1 - eine Einlassöffnung 14 auf, durch die ein Luftstrom eingeleitet wird. Der Luftstrom wird üblicherweise von einem nicht dargestellten Gebläse erzeugt, welches in demselben Gehäuse angeordnet oder an dieses angekoppelt sein kann. Der durch die Eintrittsöffnung 14 eintretende Luftstrom durchströmt den Verdampfer 16, der im Übrigen an einen nicht weiter dargestellten Kältemittelkreislauf angeschlossen ist. Durch die thermische Wechselwirkung des Luftstroms mit dem im Verdampfer 16 verdampfenden Kältemittel erfolgt eine Abkühlung und Entfeuchtung des Luftstroms, sodass sich stromabwärts des Verdampfers 16 eine besonders kalte Zone 18 innerhalb des Gehäuses 12 ausbildet. Mittels einer Luftklappenanordnung 20 wird ein Teil des gekühlten und entfeuchteten Luftstroms durch einen Heiz-Wärmeübertrager 22 geleitet. Der Heiz-Wärmeübertrager kann beispielsweise elektrisch beheizt und/oder durch einen nicht näher dargestellten Motorkühlwasser-Kreislauf erwärmt sein. Durch thermische Wechselwirkung des Luftstroms mit der Heizquelle im Heiz-Wärmeübertrager 22 wird der Luftstrom aufgeheizt, sodass sich stromabwärts des Heiz-Wärmeübertragers 22 eine Zone 24 mit besonders hoher Temperatur innerhalb des Gehäuses 12 ausbildet. Die so erzeugte Warmluft gelangt in eine stromabwärts gelegene Mischkammer 26. Ein anderer Teil der Kaltluft wird vom Verdampfer 16 am Heiz-Wärmetauscher 22 vorbei direkt in die Mischkammer 26 geleitet. Von der Mischkammer 26 gehen mehrere Luftleitkanäle ab, denen aufgrund ihrer speziellen Position unterschiedlich temperierte Teilluftströme zugeführt werden. Von diesen Luftleitkanälen gehen wenigstens einige zusammengefasst in einem Kanalbündel 32 gemeinsam von der Mischkammer 26 ab. Das Kanalbündel 32 ist in seinem ersten Abschnitt in unmittelbarer Nachbarschaft zum Gehäuse 12, d.h. das Gehäuse 12 kontaktierend, geführt. Bei der Ausführungsform von Figur 1 kontaktiert es das Gehäuse 12 insbesondere im Bereich der heißen Zone 24, sodass bei einer thermischen Wechselwirkung zwischen dem Kanalbündel 32 und dem Gehäuse 12 ein Wärmeübertrag von der heißen Zone 24 zu den im Kanalbündel 32 geführten Luftströmen erfolgen kann.

Die Figuren 2 und 3 zeigen Schnittdarstellungen entlang der Schnittlinie A-A in Figur 1 zur Verdeutlichung der erfindungsgemäßen Anordnung von Einzelkanälen 321, 322 des Kanalbündels 32.

Bei der Ausführungsform von Figur 2 sind drei Einzelkanäle vorgesehen, nämlich ein mittlerer erster Einzelkanal 321 und zwei äußere Einzelkanäle 322. Die äußeren Kanäle 322 sind zur Luftleitung hin zu Auslassöffnungen im Fußbereich des Fahrzeuginnenraums bestimmt. Der mittlere Luftleitkanal 321 ist zur Luftleitung hin zu einer zentralen Auslassöffnung im Bereich des Armaturenbrettes oder der Mittelkonsole bestimmt. Gewünscht ist eine Temperaturschichtung, sodass im Fußraum wärmere Luft ausgeblasen wird als über die zentrale Auslassstelle. Der mittlere Einzelkanal 321 ist daher trapezförmig ausgebildet, wobei er mit seiner kurzen Parallelseite die Wandung des Gehäuses 12 im Bereich der heißen Zone 24 kontaktiert. Die Querschnittsprofile der beiden äußeren Einzelkanäle 322 sind korrespondierend geformt und weisen eine entsprechend größere Kontaktfläche mit der Wandung des Gehäuses 12 im Bereich der heißen Zone 24 auf. Folglich werden die in ihnen geführten Luftströme stärker erwärmt als der im mittleren Einzelkanal 321 geführte Luftstrom, der vielmehr von den äußeren Einzelkanälen 322 gegen die Wärmequelle der heißen Zone 24 abgeschirmt wird.

Figur 3 stellt eine alternative Querschnittsgestaltung der Einzelkanäle 321, 322 dar. Hier sind die äußeren Einzelkanäle 322 L-förmig ausgebildet und schirmen den mit rechteckigem Querschnitt versehenen mittleren Einzelkanal 321 vollständig gegen die Wärmequelle der heißen Zone 24 ab.

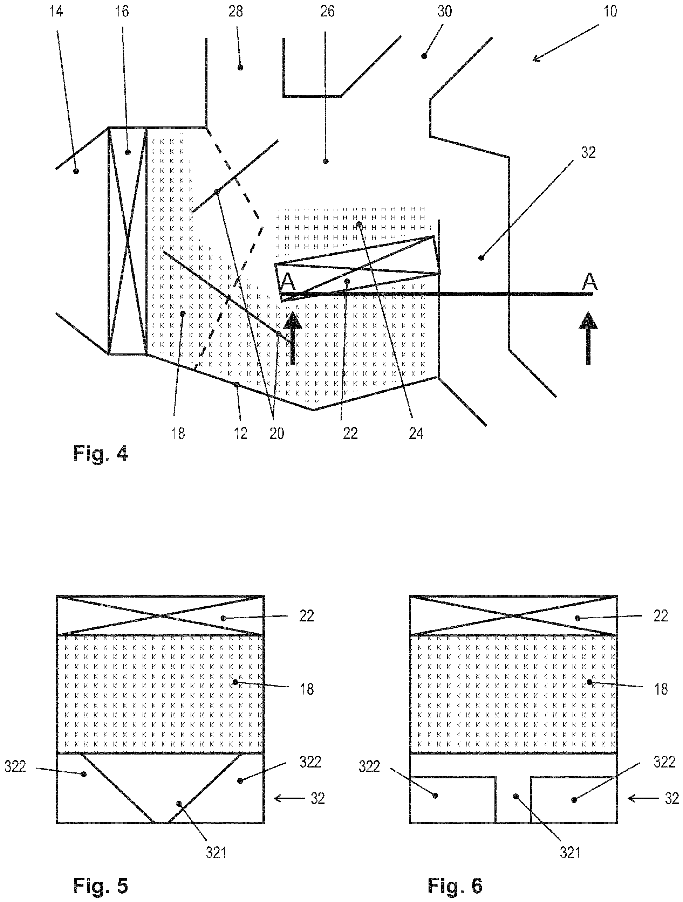

Figur 4 zeigt eine alternative Gestaltung eines Klimagerätes 10. Im Unterschied zur Ausführungsform von Figur 1 ist der Heiz-Wärmeübertrager 22 anders positioniert, sodass das Kanalbündel 32 bei dieser Ausführungsform entlang der kalten Zone 18 geführt ist. Im Übrigen wird auf die obige Erläuterung verwiesen.

Die Luftströme in den Einzelkanälen des Kanalbündels 32 "sehen" gehäuseseitig also eine Wärmesenke. Entsprechend ist die Querschnittsverteilung der Einzelkanäle im Kanalbündel 32 entsprechend angepasst. Die Figuren 5 und 6 zeigen zwei vorteilhafte Gestaltungsformen, wobei die Bestimmung der Einzelkanäle 321, 322 gleich derjenigen bei der Ausführungsform gemäß den Figuren 2 und 3 ist. Das bedeutet, dass zur Erzielung bzw. Erhaltung einer Temperaturschichtung der mittele Einzelkanal 321 kühlere Luft leiten sollte als die äußeren Einzelkanäle 322. Entsprechend wird die Querschnittsprofilverteilung der Einzelkanäle 321, 322 so gewählt, dass eine größere Kontaktfläche des mittleren Einzelkanals 321 mit dem Gehäuse 12 und kleinere Kontaktflächen der äußeren Einzelkanäle 322 mit dem Gehäuse 12, jeweils im Bereich der kalten Zone 18 entstehen. Bei der Ausführungsform von Figur 5 wird für den mittleren Einzelkanal 321 erneut eine trapezförmige Querschnittsform gewählt, jedoch in umgekehrter Ausrichtung im Vergleich zur Ausführungsform von Figur 2. Bei der Ausführungsform von Figur 6 schirmt ein T-förmiger mittlerer Einzelkanal 321 die rechteckförmigen äußeren Einzelkanäle 322 vollständig von der Wärmesenke der kalten Zone 18 ab.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere kann das Kanalbündel 32 auch mehr oder weniger als die drei in den Ausführungsformen gezeigten Einzelkanäle 321, 322 aufweisen. Auch ist es möglich, dass die Einzelkanäle 321, 322 über ihre Länge variierende Querschnittsprofile aufweisen um jeweils die korrekte Anbindung an das als Wärmequelle oder Wärmesenke wirkende Gehäuse 12 zu ermöglichen.

### Bezugszeichenliste

- 10: Klimagerät
- 12: Gehäuse
- 14: Einlassöffnung
- 16: Verdampfer
- 18: kalte Zone
- 20: Luftklappe
- 22: Heiz-Wärmeübertrager
- 24: heiße Zone
- 26: Mischzone
- 28: Luftleitkanal
- 30: Luftleitkanal
- 32: Kanalbündel
- 321: Einzelkanal von 32
- 322: Einzelkanal von 32

## Patentansprüche

1. Klimagerät (10) für ein Kraftfahrzeug, umfassend ein Gehäuse (12) mit
- einem Verdampfer (16) zur Entfeuchtung und Kühlung eines Luftstroms,
- einem dem Verdampfer (16) in Strömungsrichtung nachgeordneten Luftleitelement zur Aufspaltung des gekühlten und entfeuchteten Luftstroms wenigstens in einen ersten und einen zweiten Luftstromanteil,
- einem dem Luftleitelement (20) in Strömungsrichtung nachgeordneten Heiz-Wärmeübertrager (22) zur Aufheizung des ersten Luftstromanteils,
- einer einerseits dem Heiz-Wärmeübertrager (22) und andererseits dem Luftleitelement (26) in Strömungsrichtung nachgeordneten Mischkammer (26) zur Mischung des ersten und des zweiten Luftstromanteils,
sodass das Gehäuse (12) eine Mehrzahl von Zonen (18, 24, 26) unterschiedlicher Zonen-Relativtemperatur aufweist,
wobei von dem Gehäuse (12) Luftleitkanäle (28, 30, 32) abgehen, die zur Leitung von Mischluftanteilen unterschiedlicher Kanal-Relativtemperaturen bestimmt sind, wobei mehrere Luftleitkanäle abschnittsweise zu einem unmittelbar an dem Gehäuse (12) anliegenden Kanalbündel (32) aus parallelen und einander unmittelbar benachbarten Einzelkanälen (321, 322) unterschiedlicher Kanal-Relativtemperaturen zusammengefasst sind,
**dadurch gekennzeichnet,**
**dass** das Kanalbündel (32) entlang mehrerer Zonen (18, 24) unterschiedlicher Zonen-Relativtemperaturen verläuft und die Verteilung der Querschnitte seiner Einzelkanäle (321, 322) über deren Längserstreckung derart variiert, dass an jedem lokalen Abschnitt die Querschnittsprofile der Einzelkanäle (321, 322) einander so überlappen, dass die Kontaktflächen der Einzelkanalabschnitte mit dem Gehäuse (12) umso kleiner sind, je größer die Differenz zwischen ihrer jeweiligen Kanal-Relativtemperatur und der Zonen-Relativtemperatur unmittelbar gehäuseseitig des jeweiligen Kanalbündelabschnitts ist.

2. Klimagerät (10) nach Anspruch 1,
**dadurch gekennzeichnet,**
**dass** das Kanalbündel (32) abschnittsweise im Bereich einer Zone hoher Zonen-Relativtemperatur (24), die sich in Strömungsrichtung an den Heiz-Wärmeübertrager (22) anschließt, am Gehäuse (12) anliegt.

3. Klimagerät (10) nach einem der vorangehenden Ansprüche,
**dadurch gekennzeichnet,**
**dass** das Kanalbündel (32) abschnittsweise im Bereich einer Zone niedriger Zonen-Relativtemperatur (18), die in Strömungsrichtung unmittelbar vor dem Heiz-Wärmeübertrager (22) liegt, am Gehäuse (12) anliegt.

4. Klimagerät (10) nach einem der vorangehenden Ansprüche,
**dadurch gekennzeichnet,**
**dass** das Kanalbündel (32) wenigstens drei unmittelbar nebeneinander angeordnete Einzelkanäle (321, 322) umfasst, von denen ein mittlerer Einzelkanal (321) ein symmetrisch zu den zwei äußeren Einzelkanälen (322) ausgerichtetes, dreieckiges oder trapezförmiges Querschnittsprofil aufweist.

5. Klimagerät (10) nach einem der Ansprüche 1 bis 3,
**dadurch gekennzeichnet,**
**dass** das Kanalbündel (32) wenigstens einen ersten Einzelkanal (321) mit rechteckigem Querschnittsprofil und zwei unmittelbar nebeneinander angeordnete zweite Einzelkanäle (322), deren zueinander spiegelsymmetrische Querschnittsprofile L-förmig mit einander zugewandten, am Gehäuse (12) anliegenden Horizontal-Schenkeln ausgebildet sind, umfasst, wobei das Rechteckprofil des ersten Einzelkanals (321) bündig zwischen den Vertikal-Schenkeln der L-Profile der zweiten Einzelkanäle (322) eingebettet ist.

6. Klimagerät (10) nach einem der Ansprüche 1 bis 3,
**dadurch gekennzeichnet,**
**dass** das Kanalbündel (32) wenigstens einen ersten Einzelkanal (321) mit T-förmig ausgebildetem Querschnittsprofil, dessen Horizontalbalken am Gehäuse anliegt und zwei zweite Einzelkanäle (322) mit rechteckigem Querschnittsprofil umfasst, wobei die Rechteckprofile der zweiten Einzelkanäle (322) bündig in den Winkeln (321) zwischen dem Horizontal- und dem Vertikalbalken der T-Profile des ersten Einzelkanals (321) liegen.

## Claims

1. Air conditioning device (10) for a motor vehicle, comprising a housing (12) with
- a vaporiser (16) for dehumidifying and cooling an airflow,
- an air guiding element, downstream of the vaporiser (16) in flow direction, for splitting the cooled and dehumidified airflow into at least a first and a second airflow portion,
- a heat transmitter (22), downstream of the air guiding element (22) in flow direction, for heating the first airflow portion,
- a mixing chamber, in flow direction downstream of the heat transmitter (22) on the one hand and of the air guiding element (26) on the other hand, for mixing the first and second airflow portion,
so that the housing (12) has a plurality of zones (18, 24, 26) of different zone relative temperature, wherein air guiding channels (28, 30, 32) lead off from the housing (12) that are designed to guide mixed air portions of different channel relative temperatures,
wherein several air guiding channels are combined in portions to a channel bundle (32), resting directly on the housing (12), of parallel and directly adjacent individual channels (321, 322) of different channel relative temperatures,
**characterised in that**
the channel bundle (32) runs along several zones (18, 24) of different zone relative temperatures and varies the distribution of the cross sections of its individual channels (321, 322) over their longitudinal extension as such that the cross section profiles of the individual channels (321, 322) overlap each other at each local portion as such that the contact areas of the individual channel portions with the housing (12) are thus smaller the bigger the difference between their respective channel relative temperature and the zone relative temperature directly at the housing-side of the respective channel bundle portion.

2. Air conditioning device (10) according to claim 1,
**characterised in that**,
the channel bundle (32) rests in portions on the housing (12) in the region of a zone of high zone relative temperature (24) that connects in the flow direction to the heat transmitter (22).

3. Air conditioning device (10) according to one of the preceding claims,
**characterised in that**,
the channel bundle (32) rests in portions on the housing (12) in the region of a zone of low zone relative temperature (18) that is located in flow direction directly before the heat transmitter (22).

4. Air conditioning device (10) according to one of the preceding claims,
**characterised in that**,
the channel bundle (32) comprises at least three individual channels (321, 322), arranged directly next to one another, of which a middle individual channel (321) has a triangular or trapezoid cross section profile aligned symmetrically to the two outer individual channels (322).

5. Air conditioning device (10) according to one of the claims 1 to 3,
**characterised in that**,
the channel bundle (32) comprises at least one first individual channel (321) with rectangular cross section profile and two individual channels (322) arranged directly next to one another, whose cross section profiles mirror-symmetrical to each other are formed L-shaped with horizontal limbs resting on the housing (12) and facing each other, wherein the rectangular profile of the first individual channel (321) is flush-embedded between the vertical limbs of the L profile of the second individual channels (322) .

6. Air conditioning device (10) according to one of the claims 1 to 3,
**characterised in that**,
the channel bundle (32) comprises at least a first individual channel (321) with T-shaped cross section profile, whose horizontal beam rests on the housing, and two second individual channels (322) with rectangular cross section profile, wherein the rectangular profiles of the second individual channels (322) are flush in the angles (321) between the horizontal and the vertical beams of the T profiles of the first individual channel (321).

## Revendications

1. Appareil de climatisation (10) pour un véhicule automobile, comprenant un boîtier (12) avec
- un évaporateur (16) pour la déshumidification et le refroidissement d'un flux d'air,
- un élément de guidage de l'air disposé après l'évaporateur (16) dans la direction du flux d'air pour la séparation du flux d'air refroidi et déshumidifié au moins dans une première et une deuxième partie du flux d'air,
- un échangeur de chaleur thermique (22) disposé après l'élément de guidage de l'air (20) dans la direction du flux d'air pour le chauffage de la première partie du flux d'air,
- une chambre de mélange (26) disposée après d'une part l'échangeur de chaleur thermique (22) et d'autre part l'élément de guidage de l'air (26) dans la direction du flux d'air pour le mélange de la première et de la deuxième partie du flux d'air,
de sorte que le boîtier (12) comporte une pluralité de zones (18, 24, 26) ayant une température relative différente par zone,
dans lequel des canaux de guidage de l'air (28, 30, 32) qui sont destinés au guidage de parties d'air mélangé de températures relatives différentes par canal, sortent du boîtier (12),
dans lequel plusieurs canaux de guidage de l'air sont groupés ensemble par portions dans un faisceau de canaux (32) étant directement en appui sur le boîtier (12) composé de canaux individuels parallèles et directement adjacents les uns aux autres (321, 322) ayant des températures relatives différentes par canal,
**caractérisé en ce que**
le faisceau de canaux (32) passe le long de plusieurs zones (18, 24) ayant des températures relatives différentes par zone et la distribution des portions transversales de ses canaux individuels (321, 322) varie dans leur sens longitudinal, de sorte qu'à chaque portion locale les profils de section transversale des canaux individuels (321, 322) se superposent les uns aux autres, de sorte que plus les surfaces de contact des portions des canaux individuels avec le boîtier (12) sont petites, plus la différence entre leur température relative par canal respective et la température relative par zones directement du côté boîtier de la portion du faisceau de canaux respectif est grande.

2. Appareil de climatisation (10) selon la revendication 1,
**caractérisé en ce que**
le faisceau de canaux (32) est en appui sur le boîtier (12) par portions au niveau d'une zone de température relative par zone élevée (24), qui se raccorde à l'échangeur de chaleur thermique (22) dans la direction du flux d'air.

3. Appareil de climatisation (10) selon l'une des revendications précédentes,
**caractérisé en ce que**
le faisceau de canaux (32) est en appui sur le boîtier (12) par portions au niveau d'une zone ayant une température relative par zone basse (18), qui est située directement avant l'échangeur de chaleur thermique (22) dans la direction du flux d'air.

4. Appareil de climatisation (10) selon l'une des revendications précédentes,
**caractérisé en ce que**
le faisceau de canaux (32) comprend au moins trois canaux individuels (321, 322) placés directement les uns à côté des autres, dont un canal individuel médian (321) a un profil de section transversale triangulaire ou trapézoïdal, orienté symétriquement aux deux canaux individuels externes (322).

5. Appareil de climatisation (10) selon l'une des revendications 1 à 3,
**caractérisé en ce que**
le faisceau de canaux (32) comprend au moins un premier canal individuel (321) avec un profil de section transversale rectangulaire et deux deuxièmes canaux individuels (322) directement placés l'un à côté de l'autre, dont les profils de section transversale ayant une symétrie spéculaire les uns par rapport aux autres sont réalisés en forme de L, avec des branches horizontales tournées l'une vers l'autre, est en appui sur le boîtier (12), le profil rectangulaire du premier canal individuel (321) étant intégré affleurant entre les branches verticales des profils en L des deuxièmes canaux individuels (322).

6. Appareil de climatisation (10) selon l'une des revendications 1 à 3,
**caractérisé en ce que**
le faisceau de canaux (32) comprend au moins un premier canal individuel (321) avec un profil de section transversale réalisé en forme de T, dont la barre horizontale est en appui sur le boîtier et deux deuxièmes canaux individuels (322) avec un profil de section transversale rectangulaire, les profils rectangulaires des deuxièmes canaux individuels (322) étant situés affleurant dans les angles (321) entre la branche horizontale et la branche verticale des profils en T du premier canal individuel (321).
